# EUROPÄISCHE PATENTANMELDUNG

(11) **EP 2 241 791 A2**
(43) Veröffentlichungstag der Anmeldung: **20.10.2010**
(21) Anmeldenummer: 10450060.8
(22) Anmeldetag: 15.04.2010
(51) Int. Cl.: F16K 1/12

(54) **Axialventil mit einem in einem Gehäuse axial geführten Ventilrohr**

(30) Priorität: 16.04.2009 AT 2372009 U
(71) Anmelder: IAG Industrie Automatisierungsgesellschaft mbH, 2722 Weikersdorf (AT)
(72) Erfinder: Pokorny, Dieter, 2722 Winzendorf (AT)
(74) Vertreter: Rippel, Andreas

(57) **Zusammenfassung**

Bei einem Axialventil mit einem in einem Gehäuse (1; 17, 18) axial geführten Ventilrohr (2, 10), das durch ein Betätigungsorgan (8, 11) gegen eine Dichtplatte (6; 15, 16) bewegbar ist, ist koaxial zum Ventilrohr (2, 10) im Gehäuse (1; 17, 18) ein Druckreglerkolben (3) angeordnet.

## Beschreibung

Die Erfindung bezieht sich auf ein Axialventil mit einem in einem Gehäuse axial geführten Ventilrohr, das durch ein Betätigungsorgan gegen eine Dichtplatte bewegbar ist.

Es ist vielfach erwünscht, den abgehenden oder ankommenden Druck in einem Axialventil zu begrenzen oder zu regeln. Bekannte Lösungen mit getrennten Geräten sind jedoch verhältnismäßig kompliziert.

Die Erfindung hat es sich zum Ziel gesetzt, ein Axialventil zu schaffen, das auf einfache Weise mit einem Druckregler kombiniert werden kann.

Erreicht wird dies bei einem Axialventil der eingangs genannten Art dadurch, das koaxial zum Ventilrohr im Gehäuse ein Druckreglerkolben angeordnet ist.

Die Vergrößerung des Gehäuses zur Unterbringung des Druckreglerkolbens ist einfach durchzuführen, wobei das Gehäuse ein- oder mehrteilig ausgebildet werden kann.

Bei einem Ausführungsbeispiel der Erfindung ist das Betätigungsorgan als Magnetspule ausgebildet.

Es ist aber auch möglich, dass das Ventilrohr an seinem Umfang als Kolben ausgebildet ist, der zur Bewegung des Ventilrohres beidseitig mit einem Druckmedium beaufschlagbar ist.

Eine Ausführungsform eines erfindungsgemäßen Axialventils zeichnet sich dadurch aus, dass die Dichtplatte auf einer Seite zum Zusammenwirken mit dem Ventilrohr, auf der anderen Seite zum Zusammenwirken mit dem Druckreglerkolben ausgebildet ist. Es ist daher nur eine Dichtplatte vorzusehen.

Bezogen auf die Strömungsrichtung des zu regelnden Mediums kann der Druckreglerkolben nach dem Ventilrohr angeordnet sein. Es ist aber auch möglich, den Druckreglerkolben vor dem Ventilrohr anzuordnen.

Wie bereits ausgeführt, kann das Gehäuse ein- oder mehrteilig sein. Bei einer Ausführungsform der Erfindung ist das Gehäuse zweiteilig ausgebildet, wobei der eine Teil das Ventilrohr, der andere Teil den Druckreglerkolben aufnimmt.

Nachstehend ist die Erfindung anhand von in den Zeichnungen dargestellten Ausführungsbeispielen näher beschrieben, ohne auf diese Beispiele beschränkt zu sein. Dabei zeigen jeweils im Axialschnitt
- Fig. 1: ein erfindungsgemäßes Axialventil, bei dem das Betätigungsorgan für das Ventilrohr als Magnetspule ausgebildet ist;
- Fig. 2: ein Axialventil nach der Erfindung, bei dem die Betätigung des Ventilrohres über ein Druckmedium erfolgt;
- Fig.3: ein erfindungsgemäßes Axialventil, bei dem der Druckreglerkolben im Gegensatz zu den beiden anderen Ausführungsbeispielen in Strömungsrichtung des zu regelnden Mediums vor dem Ventilrohr angeordnet ist. Die Strömungsrichtung des zu regelnden Mediums ist bei allen drei gezeigten Ausführungsformen der Erfindung, auf die Zeichnung bezogen, von unten nach oben.

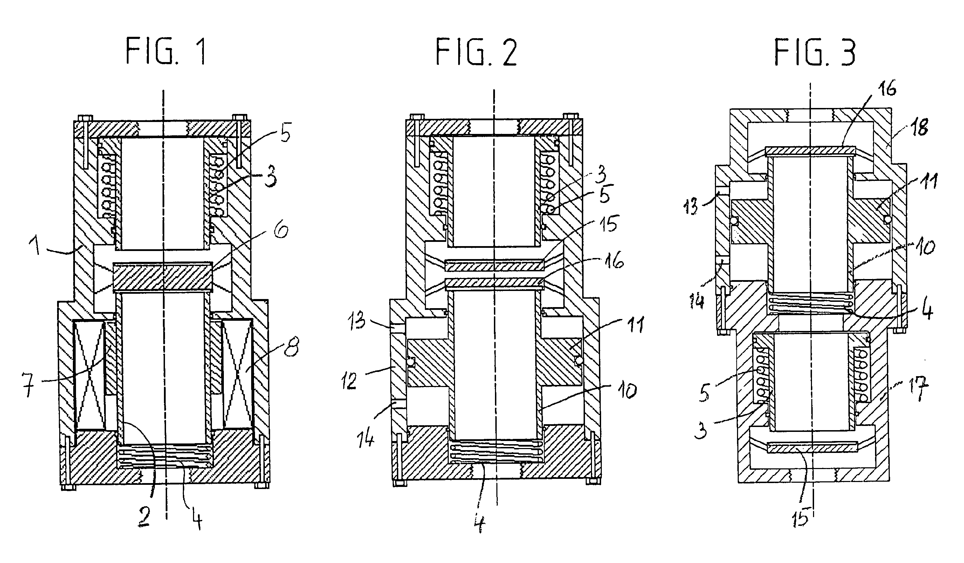

Gemäß Fig. 1 ist in einem Gehäuse 1 ein Ventilrohr 2 und ein Druckreglerkolben 3 axial geführt. Auf das Ventilrohr 2 wirkt eine Feder 4, auf den Druckreglerkolben 3 eine Feder 5.

Zwischen dem Ventilrohr 2 und dem Druckreglerkolben 3 ist eine Dichtplatte 6 angeordnet, die auf einer Seite zum Zusammenwirken mit dem Ventilrohr 2 und auf der anderen Seite zum Zusammenwirken mit dem Druckreglerkolben 3 ausgebildet ist.

Auf dem Ventilrohr 2 ist ein Anker 7 angeordnet, mit dem eine Magnetspule 8 zusammenwirkt. Bei entsprechender Erregung der Magnetspule 8 kann daher das Ventilrohr 2 verschoben und zur Anlage an die Dichtplatte 6 gebracht - wie dargestellt - oder von dieser weg bewegt werden.

Die Ausführungsform nach Fig. 2 unterscheidet sich von der Ausführungsform nach Fig. 1 vor allem durch die Betätigung des Ventilrohres 10. Dieses ist an seinem Umfang als Kolben 11 ausgebildet, der zur Bewegung des Ventilrohres 10 beidseitig mit einem Druckmedium beaufschlagbar ist.

Das Druckmedium kann durch Bohrungen 13, 14 im Gehäuse 12 zu- bzw. abgeführt werden.

Ein weiterer Unterschied gegenüber dem Ausführungsbeispiel nach Fig. 1 besteht darin, dass zwei Dichtplatten 15, 16 angeordnet sind, wobei die Dichtplatte 15 mit dem Druckreglerkolben 3 und die Dichtplatte 16 mit dem Ventilrohr 10 zusammenwirkt.

Die übrigen Teile sind gleich wie beim Ausführungsbeispiel nach Fig. 1 und sind daher auch mit den gleichen Bezugszeichen versehen.

Das Ausführungsbeispiel nach Fig. 3 ähnelt weitgehend dem Ausführungsbeispiel nach Fig. 2. Unterschiedlich ist die Anordnung des Druckreglerkolbens 3 vor dem Ventilrohr 10. Auch ist das Gehäuse in zwei Teile 17 und 18 aufgeteilt, wobei der Teil 17 den Druckreglerkolben 3 und der Teil 18 das Ventilrohr 10 aufnimmt.

In allen Zeichnungen ist eine Entlüftungsbohrung im Bereich des Druckreglerkolbens 3 aus Gründen der Übersichtlichkeit nicht dargestellt.

## Patentansprüche

1. Axialventil mit einem in einem Gehäuse (1; 17, 18) axial geführten Ventilrohr (2, 10), das durch ein Betätigungsorgan (8, 11) gegen eine Dichtplatte (6; 15, 16) bewegbar ist, **dadurch gekennzeichnet, dass** koaxial zum Ventilrohr (2, 10) im Gehäuse (1; 17, 18) ein Druckreglerkolben (3) angeordnet ist.

2. Axialventil nach Anspruch 1, **dadurch gekennzeichnet, dass** das Betätigungsorgan als Magnetspule (8) ausgebildet ist.

3. Axialventil nach Anspruch 1, **dadurch gekennzeichnet, dass** das Ventilrohr (10) an seinem Umfang als Kolben (11) ausgebildet ist, der zur Bewegung des Ventilrohres (10) beidseitig mit einem Druckmedium beaufschlagbar ist.

4. Axialventil nach einem der Ansprüche 1 bis 3, **dadurch gekennzeichnet, dass** die Dichtplatte (6) auf einer Seite zum Zusammenwirken mit dem Ventilrohr (2), auf der anderen Seite zum Zusammenwirken mit dem Druckreglerkolben (3) ausgebildet ist.

5. Axialventil nach einem der Ansprüche 1 bis 3, **dadurch gekennzeichnet, dass** in Strömungsrichtung der Druckreglerkolben (3) nach dem Ventilrohr (2, 10) angeordnet ist.

6. Axialventil nach einem der Ansprüche 1 bis 3, **dadurch gekennzeichnet, dass** in Strömungsrichtung der Druckreglerkolben (3) vor dem Ventilrohr (10) angeordnet ist.

7. Axialventil nach einem der Ansprüche 1 bis 6, **dadurch gekennzeichnet, dass** das Gehäuse (17, 18) zweiteilig ausgebildet ist, wobei der eine Teil (18) das Ventilrohr, der andere Teil (17) den Druckreglerkolben (3) aufnimmt.
